# FASCICULE DE BREVET EUROPEEN

(11) **EP 3 488 990 B1**
(45) Date de publication et mention de la délivrance du brevet: **24.02.2021**
(21) Numéro de dépôt: 18207701.6
(22) Date de dépôt: 22.11.2018
(51) Int. Cl.: B29C 48/92, B29C 48/96

(54) **INSTALLATION D'EXTRUSION MUNIE D'UN SYSTEME DE CONTROLE APTE A DETECTER UNE ANOMALIE ET PROCEDE ASSOCIE**
EXTRUSIONSANLAGE MIT EINEM STEUERUNGSSYSTEM ZUR ERFASSUNG EINER ANOMALIE UND EINES VERFAHRENS
EXTRUSION SYSTEM HAVING A CONTROL SYSTEM FOR DETECTING ANOMALY AND ASSOCIATED METHOD

(30) Priorité: 23.11.2017 FR 1761105
(43) Date de publication de la demande: 29.05.2019
(73) Titulaire: ArianeGroup SAS, 75015 Paris (FR)
(72) Inventeur: NORLUND, Samuel Lars, 24400 Saint Laurent des Hommes (FR); AMBIT, Vincent, 33000 Bordeaux (FR); HONORAT, Philippe, 33980 Audenge (FR)
(74) Mandataire: Cabinet Beau de Loménie

(56) Documents cités:
- WO-A1-2014/179047
- WO-A1-2016/181361
- DE-A1-102013 013 902
- JP-A- H 024 435
- JP-A- H05 309 721
- JP-A- S63 139 705
- US-A1- 2016 046 055

## Description

### Arrière-plan de l'invention

La présente invention se rapporte au domaine général des installations d'extrusion, et concerne plus particulièrement une installation d'extrusion comprenant des moyens pour détecter des anomalies de fonctionnement en continu.

Les extrudeuses sont utilisées de façon connue dans les industries où l'on cherche à mettre en forme un matériau au travers d'une filière ayant la section d'une pièce à obtenir. On forme généralement une pièce de forme allongée qui peut éventuellement être découpée par la suite. On peut utiliser des matériaux aussi divers que des métaux, des plastiques, des caoutchoucs, des matériaux comprenant un liant polymérique et des charges notamment énergétiques, des produits alimentaires ou pharmaceutiques.

Le contrôle du procédé de fabrication mettant en œuvre une extrudeuse est difficile à réaliser de par le caractère continu du procédé ainsi que le confinement des moyens qui permettent la compression et l'avance du matériau, généralement à l'intérieur d'un ou plusieurs fourreaux. Ces moyens peuvent par exemple comprendre une ou plusieurs vis sans fin logées à l'intérieur du ou des fourreaux. Ainsi, il est bien souvent impossible de détecter une anomalie avant que le matériel ne tombe en panne et sans devoir démonter l'extrudeuse, ou de détecter un problème dans le matériau extrudé avant que ce dernier ne sorte de l'extrudeuse et puisse être analysé.
On connait JPS63139705 qui divulgue une méthode de détection d'une anomalie dans un dispositif de transport à vis, WO2014/179047 qui divulgue une méthode de détection d'une fuite d'azote durant une polymérisation, WO2016/181361 qui divulgue un dispositif d'inspection optique pour extrudeuse, JPH5309721 qui divulgue un procédé de détection de l'usure de la vis et du cylindre d'une extrudeuse, US2016/046055 et DE102013013902 qui divulguent des machines de moulage par injection et JPH024435 qui divulgue un procédé de contrôle d'un état de mélange d'un matériau.

Il existe donc un besoin pour une installation d'extrusion qui permette de détecter des anomalies de fonctionnement de l'extrudeuse en continu.

### Objet et résumé de l'invention

La présente invention a donc pour but principal de permettre la détection d'anomalies de fonctionnement en continu sur une extrudeuse, en proposant, selon un premier aspect, une installation d'extrusion selon la revendication 7.

L'installation selon l'invention permet de disposer de moyens de contrôle non destructifs et passifs pour détecter des anomalies dans une extrudeuse munie d'au moins une vis d'extrusion. Le capteur acoustique fixé sur le fourreau de l'extrudeuse est sensible à des évènements continus ou ponctuels survenant dans l'extrudeuse et provoquant des vibrations acoustiques. Le système de contrôle peut ainsi, en fonction des signaux transmis par le capteur, détecter une anomalie dans le fonctionnement de l'extrudeuse ou dans le procédé d'extrusion réalisé dans cette extrudeuse. Ce capteur est fixé sur le fourreau de façon à ce que les vibrations acoustiques du fourreau puissent être mesurées par le capteur. Le capteur acoustique associé au système de contrôle permet d'identifier des variations dans l'amplitude (ou l'énergie) du signal acoustique, et éventuellement d'analyser ce signal en termes fréquentiels.

Selon un exemple, la présence d'évènements discrets répétitifs à une fréquence de l'ordre de la vitesse de rotation de la vis dans le fourreau peut être issue d'un contact entre la vis et le fourreau qu'il faut corriger par exemple en recentrant la vis dans le fourreau. Selon un autre exemple, lorsque l'amplitude du signal diminue après l'introduction d'un liant dans l'extrudeuse, cela indique qu'un phénomène de lubrification est en train de s'opérer dans l'extrudeuse. A l'inverse, une augmentation de l'amplitude du signal peut être la conséquence d'une variation de la composition du matériau à l'intérieur de l'extrudeuse. Si elle n'était pas prévue, cette variation d'amplitude peut permettre de détecter une anomalie dans la composition du matériau extrudé. Plus simplement, l'enregistrement d'un signal bref et de forte amplitude peut permettre de détecter rapidement l'introduction d'un corps étranger à l'intérieur de l'extrudeuse. Ainsi, l'installation selon l'invention donne les moyens de rapidement détecter des anomalies de fonctionnement de l'extrudeuse, qu'il s'agisse d'anomalies mécaniques liées au fonctionnement de la machine ou des anomalies liées à la lubrification ou à la composition du matériau extrudé.

Dans un exemple de réalisation, l'extrudeuse peut comprendre au moins deux vis d'extrusion, on peut alors parler de procédé « bi-vis ». Dans ce cas, le capteur acoustique peut en outre permettre de détecter un contact entre les deux vis, en cas de signal acoustique comprenant des évènements discrets répétés à une fréquence proche de la vitesse de rotation des vis (ou un multiple de celle-ci).

Dans un exemple de réalisation, le capteur acoustique peut être fixé sur le fourreau à l'aide d'un aimant. L'emploi d'un aimant permet avantageusement de pouvoir retirer le capteur ou le déplacer facilement sur le fourreau. En variante, le capteur acoustique peut être collé sur le fourreau.

Dans l'installation d'extrusion de la revendication 7, une pluralité de capteurs acoustiques sont fixés sur le fourreau et répartis circonférentiellement autour du fourreau, chacun de ces capteurs étant relié au système de contrôle. Cette disposition permet d'améliorer la précision dans la détection des anomalies, par exemple un contact entre la vis et le fourreau, dans un tronçon donné de l'extrudeuse.

Dans un exemple de réalisation, les capteurs acoustiques peuvent être répartis longitudinalement le long du fourreau. Cette disposition est avantageuse lorsque l'on dispose d'un fourreau présentant une longueur importante, ou constitué de plusieurs portions de fourreau consécutives connectées entre elles, et que l'on cherche par exemple à localiser plus précisément l'anomalie le long de l'extrudeuse.

Le système de contrôle est configuré pour effectuer une analyse en amplitude du signal acoustique enregistré par le capteur acoustique, et éventuellement une analyse fréquentielle du signal acoustique enregistré par le capteur acoustique.

L'invention vise aussi, selon un deuxième aspect, un procédé d'extrusion d'un matériau selon la revendication 1.

Le matériau extrudé comprend un liant et une ou plusieurs charges énergétiques. L'invention présente un avantage important en termes de sécurité. En effet, le capteur acoustique est un outil passif dont le fonctionnement ne nécessite pas d'apporter de l'énergie à proximité de l'extrudeuse. Lorsqu'un matériau énergétique est extrudé, l'emploi d'un capteur passif réduit ainsi les risques d'explosion incontrôlée du matériau. En outre, grâce à l'invention, on peut détecter des contacts entre la vis et le fourreau, ou entre deux vis le cas échéant, qui sont susceptibles de créer des étincelles à l'intérieur du fourreau. En détectant immédiatement ces contacts, on évite l'apparition d'étincelles qui pourraient initier une combustion, et on augmente encore ainsi la sécurité. Enfin, la possibilité de détecter des variations dans la composition du matériau extrudé pour un liant avec charges énergétiques permet d'anticiper la formation d'un matériau dont la sensibilité augmente dans l'extrudeuse (par exemple à cause d'une variation du ratio liant/charges), et améliore également la sécurité.

### Brève description des dessins

D'autres caractéristiques et avantages de la présente invention ressortiront de la description faite ci-dessous, en référence aux dessins annexés qui en illustrent des exemples de réalisation dépourvu de tout caractère limitatif. Sur les figures :
- la figure 1 est une vue schématique en coupe d'un premier exemple d'installation utilisable dans le cadre d'un procédé selon l'invention comprenant une extrudeuse mono-vis,
- la figure 2 est une vue schématique de face d'un deuxième exemple d'installation selon l'invention comprenant une extrudeuse mono-vis, et
- la figure 3 est une vue schématique en coupe d'un troisième exemple d'installation utilisable dans le cadre d'un procédé selon l'invention comprenant une extrudeuse bi-vis,
- la figure 4 est un graphe montrant l'évolution de l'amplitude d'un signal mesuré par un capteur en fonction du temps, en cas de contact entre une vis et le fourreau, et
- la figure 5 est un graphe montrant l'évolution de l'amplitude d'un signal mesuré par un capteur en fonction du temps, en cas de dérive de la composition du matériau extrudé.

### Description détaillée de l'invention

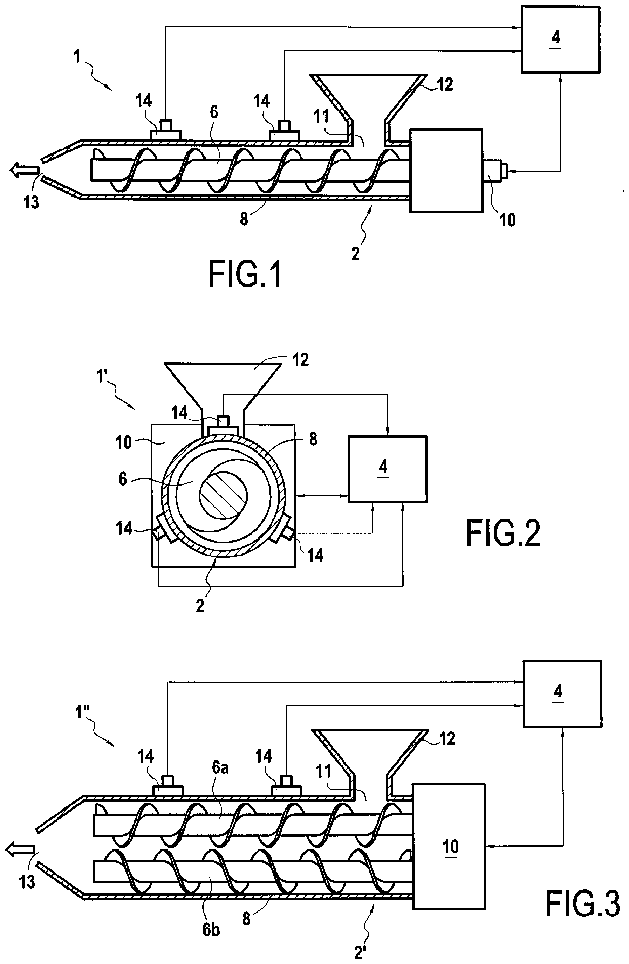

La figure 1 montre une vue très schématique en coupe d'une installation 1 utilisable dans le cadre d'un procédé selon l'invention. L'installation 1 comprend une extrudeuse 2 et un système de contrôle 4. L'extrudeuse 2 exemplifiée ici est une extrudeuse munie d'une unique vis 6, par exemple une vis sans fin, logée à l'intérieur d'un fourreau 8. Le fourreau 8 peut être de forme généralement cylindrique, et éventuellement présenter une section variable. La vis 6 a pour rôle de faire avancer le matériau à extruder dans l'extrudeuse 2. L'extrudeuse 2 comprend ainsi un moteur 10 configuré pour faire tourner la vis 6 à l'intérieur du fourreau 8 à une vitesse de rotation prédéterminée. A une extrémité du fourreau 8 à proximité du moteur se trouve une ouverture supérieure 11 dans laquelle débouche une trémie 12 par laquelle le matériau à extruder est destiné à être introduit dans l'extrudeuse 2. A une extrémité du fourreau 8 opposée au moteur 10 se trouve une sortie 13 de l'extrudeuse qui peut être munie de divers outils (non représentés) de mise en forme du matériau extrudé.

L'extrudeuse 2 comprend ici deux capteurs acoustiques 14 répartis longitudinalement le long du fourreau 8. Les capteurs acoustiques 14 sont par exemple munis d'aimants pour être fixés sur le fourreau 8 de manière réversible. Les capteurs acoustiques 14 sont ici fixés sur une surface externe du fourreau. Les capteurs acoustiques 14 sont ici connectés au système de contrôle 4 de façon passive, c'est-à-dire qu'aucune énergie électrique n'est transmise aux capteurs acoustiques 14 par le système de contrôle 4. Bien entendu, le nombre de capteurs 14 sera adapté en fonction des besoins, et notamment de la taille de l'extrudeuse 2.

Dans l'exemple illustré, le système de contrôle 4 peut être configuré pour commander le moteur de l'extrudeuse 2. Par exemple, le système de contrôle 4 peut être configuré pour arrêter la rotation de la vis 6 en cas de détection d'une anomalie dans l'extrudeuse 2 à l'aide des capteurs acoustiques 14.

En particulier, le système de contrôle 4 peut être apte à effectuer, en continu, une analyse fréquentielle et/ou en amplitude du signal acoustique enregistré par les capteurs acoustiques 14 et à arrêter l'extrudeuse 2, notamment son moteur 10, en cas de détection d'une anomalie. Grâce à la répartition des capteurs 14 longitudinalement le long du fourreau, il est possible d'obtenir une estimation de la position longitudinale de l'anomalie détectée, le cas échéant.

Lorsqu'un corps étranger est introduit dans l'extrudeuse 2 en fonctionnement (à vide ou non) par accident, les capteurs acoustiques 14 enregistrent un signal bref de forte amplitude, qui peut être détecté par le système de contrôle 4 afin que ce dernier arrête immédiatement l'extrudeuse 2. Lorsque l'extrudeuse fonctionne (à vide ou non) et que le signal enregistré comprend des évènements discrets qui se répètent à une fréquence régulière proche de la vitesse de rotation de la vis 6 (ou d'un multiple de celle-ci) dans le fourreau 8, cela peut être la conséquence de contacts et/ou frottements entre la vis 6 et le fourreau 8. Le système de contrôle, en analysant le signal en fréquence, peut détecter une telle anomalie et arrêter immédiatement l'extrudeuse 2 pour qu'un opérateur puisse par exemple réaligner ou recentrer la vis 6 dans le fourreau 8.

Lorsque l'extrudeuse est en fonctionnement, on peut observer des variations dans l'amplitude (ou l'énergie) du signal acoustique enregistré par les capteurs 14 au cours du temps. De façon générale, on a observé qu'une réduction de l'amplitude est corrélée à l'introduction de plus de liant dans l'extrudeuse lorsque l'on extrude un matériau comprenant un liant et des charges énergétiques. Cet effet est généralement dû à la lubrification opérée par le liant, ainsi qu'à une diminution de la densité du matériau. Par conséquent, dans l'hypothèse où l'amplitude du signal acoustique mesuré par les capteurs 14 augmente après l'introduction de plus de liant, le système de contrôle 4 peut détecter une anomalie liée à l'introduction du liant dans l'extrudeuse 2 et l'arrêter. On a également observé que si l'amplitude augmente de façon importante, par exemple de plus de 30% ou 40% sur un temps d'une dizaine de secondes par rapport à une amplitude moyenne constante auparavant, cela peut être dû à une dérive de la composition du matériau, et notamment à une augmentation du taux de charges dans le matériau. Par conséquent, dans l'hypothèse où l'amplitude augmente de façon importante alors qu'il n'y a aucun changement dans la composition introduite dans l'extrudeuse 2, le système de contrôle 4 peut détecter une anomalie de dérive de la composition de matériau extrudé et arrêter l'extrudeuse 2.

La figure 2 montre un deuxième exemple d'installation 1' selon l'invention. Sauf mention contraire, les signes de référence identiques sur les différentes figures désignent des caractéristiques identiques. L'extrudeuse 2 est représentée vue de face, c'est-à-dire en face de la sortie 13. Dans cet exemple l'installation 1' comprend toujours une extrudeuse 2 comprenant une vis 6 logée dans un fourreau 8. Dans cet exemple, l'extrudeuse comprend trois capteurs acoustiques 14 répartis non plus longitudinalement le long du fourreau 8 comme dans l'exemple précédent, mais circonférentiellement autour du fourreau 8. Cette disposition permet d'augmenter la fiabilité de la mesure. Cette disposition peut en outre permettre, en analysant les signaux provenant de chacun des capteurs 14, d'estimer la position de l'anomalie dans un plan transversal du fourreau.

La figure 3 montre un troisième exemple d'installation 1" utilisable dans le cadre d'un procédé selon l'invention. Dans cet exemple, l'extrudeuse 2' comprend deux vis 6a et 6b qui peuvent être contrarotatives ou corotatives. On appelle alors l'extrudeuse 2' une extrudeuse « bi-vis ». Le fonctionnement de l'extrudeuse 2' est similaire à celui de l'extrudeuse 2 des exemples précédents. Dans cet exemple, les capteurs 14 sont disposés sur le fourreau 8, le long de ce dernier, de la même façon que dans l'installation 1.

Un procédé d'extrusion selon l'invention comprend une étape d'extrusion du matériau au travers d'une extrudeuse 2 ou 2' durant laquelle le signal acoustique enregistré par le ou les capteurs 14 est analysé par le système de contrôle 4 en vue de détecter une anomalie, comme l'une de celles décrites précédemment. L'étape d'extrusion du matériau peut comprendre au préalable l'introduction du matériau à l'intérieur de l'extrudeuse 2 ou 2', par exemple à l'intérieur de la trémie 12. Le procédé peut comprendre une étape de détection en continu d'une anomalie dans laquelle on enregistre le signal acoustique d'au moins un capteur acoustique, on analyse en amplitude, et éventuellement en fréquence, le signal enregistré, et on en déduit la présence d'une anomalie dans l'extrudeuse. Le procédé peut en outre comprendre une étape durant laquelle on interrompt le fonctionnement de l'extrudeuse si une anomalie est détectée. Comme décrit précédemment, une anomalie peut par exemple être liée à la composition du matériau extrudé, à un contact entre des pièces mécaniques dans l'extrudeuse, ou à l'introduction d'un corps étranger dans l'extrudeuse.

Le matériau extrudé comprend un liant, par exemple polymérique, et une ou plusieurs charges énergétiques. On peut également introduire un réticulant lorsque le liant comprend un polymère à réticuler. Dans ce cas, l'invention permet d'augmenter la sécurité de l'installation d'extrusion, car aucune énergie n'est apportée à proximité du matériau en cours d'extrusion pour réaliser la surveillance de l'extrusion, et l'extrusion du matériau peut être interrompue immédiatement en cas de détection d'une anomalie. En particulier, si l'anomalie est un contact entre la vis et le fourreau, ou entre deux vis le cas échéant, on peut réduire l'apparition d'étincelles en détectant rapidement ce contact.

Dans les installations 1, 1' et 1" décrites ci-avant, une pluralité de capteurs 14 a toujours été utilisée. En variante, on peut bien entendu utiliser un unique capteur 14 positionné sur le fourreau 8, ou un nombre plus important de capteurs 14 qu'exemplifié. De façon connue, des moyens de mise en température peuvent être présent dans le fourreau 8 ou à proximité de celui-ci pour réguler la température dans l'extrudeuse, ces moyens peuvent comprendre un fluide de refroidissement ou un fluide chauffé dans des canaux de régulation de température. Enfin, le fourreau 8 a toujours été illustré comme étant en une seule pièce, mais il pourrait en variante être segmenté et comprendre plusieurs portions fixées les unes aux autres dans la direction longitudinale du fourreau 8.

### Exemple 1

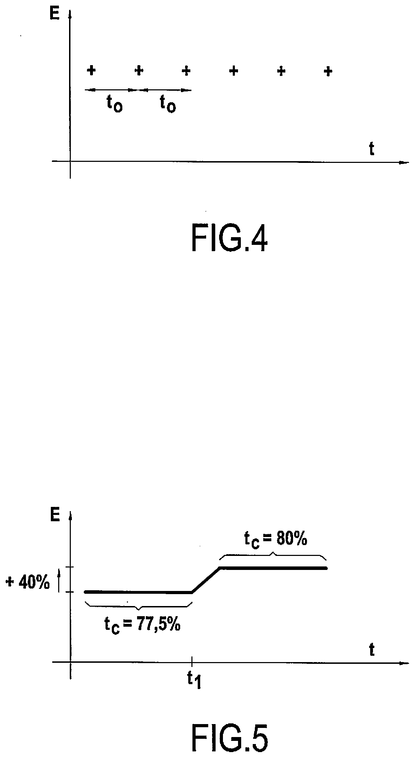

La figure 4 montre de façon schématique l'amplitude E du signal acoustique enregistré par un capteur acoustique positionné sur le fourreau d'une extrudeuse mono-vis telle que celle des figures 1 et 2 en fonction du temps. Durant cette mesure, l'extrudeuse fonctionne à vide, c'est-à-dire qu'aucun matériau n'est présent à l'intérieur.

On observe un signal de type discret comprenant des impulsions périodiques séparées d'une durée sensiblement constante t₀. Le temps t₀ en minutes peut être comparé à la fréquence de rotation en nombre de tours par minute de la vis de l'extrudeuse, et on observe que 1/t₀ est proche de cette fréquence de rotation ou d'un multiple de celle-ci. Ce type de signal est caractéristique d'un contact entre la vis et le fourreau. Ainsi, en configurant le système de contrôle pour détecter la présence d'un signal comprenant des impulsions brèves à intervalle régulier en analysant notamment sa fréquence, ce dernier peut signaler la présence d'un contact entre la vis et le fourreau à l'opérateur et arrêter l'extrudeuse.

### Exemple 2

La figure 5 montre de façon schématique l'amplitude E du signal acoustique enregistré par un capteur acoustique positionné sur le fourreau d'une extrudeuse bi-vis telle que celle de la figure 3 en fonction du temps. Le taux de remplissage de l'extrudeuse est proche de 100%. Le matériau extrudé comprend un liant polymérique, tel que du polybutadiène hydroxytéléchélique (PBHT), comprenant des charges énergétiques, par exemple de perchlorate d'ammonium.

Au début de l'extrusion, le taux massique de charges t_{c} à l'intérieur du matériau à extruder est de 77,5%. Au temps t₁ on a modifié la composition du matériau introduit dans l'extrudeuse pour que le taux de charge soit augmenté à 80%. On observe une augmentation de 40% de l'amplitude E du signal enregistré par le capteur acoustique dès le changement de composition à l'intérieur de l'extrudeuse, la transition s'effectuant sur un temps de quelques dizaines de secondes. Ainsi, en configurant le système de contrôle de l'installation pour détecter une telle variation de l'amplitude E du signal, ce dernier peut signaler à l'opérateur un tel changement et arrêter l'extrudeuse.

## Revendications

1. Procédé d'extrusion d'un matériau comprenant un liant et une ou plusieurs charges énergétiques mettant en œuvre une installation (1 ; 1' ; 1") comprenant :
- une extrudeuse (2 ; 2') comprenant un fourreau (8) dans lequel est présente au moins une vis d'extrusion (6 ; 6a, 6b), l'extrudeuse comprenant au moins un capteur acoustique (14) fixé sur le fourreau, et
- un système de contrôle (4) apte à détecter une anomalie en fonction du signal acoustique enregistré par le capteur acoustique, le système de contrôle étant configuré pour mesurer des variations dans l'amplitude du signal acoustique enregistré par le capteur acoustique,
le procédé comprenant une étape d'extrusion du matériau au travers de l'extrudeuse (2 ; 2') durant laquelle le signal acoustique enregistré par le capteur (14) est analysé par le système de contrôle (4), et une étape de détection d'une variation de la composition du matériau extrudé à partir d'une variation dans l'amplitude du signal acoustique.

2. Procédé selon la revendication 1, dans lequel durant l'étape de détection on détecte une variation du ratio liant/charges.

3. Procédé selon la revendication 1 ou 2, dans lequel l'extrudeuse (2') comprend au moins deux vis d'extrusion (6a, 6b).

4. Procédé selon l'une quelconque des revendications 1 à 3, dans lequel une pluralité de capteurs acoustiques (14) sont fixés sur le fourreau, chacun de ces capteurs étant relié au système de contrôle (4).

5. Procédé selon la revendication 4, dans lequel les capteurs acoustiques (14) sont répartis circonférentiellement autour du fourreau (8).

6. Procédé selon la revendication 4 ou 5, dans lequel les capteurs acoustiques (14) sont répartis longitudinalement le long du fourreau (8).

7. Installation d'extrusion (1 ; 1' ; 1") comprenant :
- une extrudeuse (2 ; 2') comprenant un fourreau (8) dans lequel est présente au moins une vis d'extrusion (6 ; 6a, 6b), l'extrudeuse comprenant au moins un capteur acoustique (14) fixé sur le fourreau, et
- un système de contrôle (4) apte à détecter une anomalie en fonction du signal acoustique enregistré par le capteur acoustique, le système de contrôle étant configuré pour effectuer une analyse en amplitude du signal acoustique enregistré par le capteur acoustique,
l'installation comprenant une pluralité de capteurs acoustiques (14) fixés sur le fourreau et répartis circonférentiellement autour du fourreau, chacun de ces capteurs étant relié au système de contrôle (4), et l'installation étant **caractérisée en ce qu'**elle est configurée pour réaliser une étape de détection d'une variation de la composition d'un matériau extrudé à partir d'une variation dans l'amplitude du signal acoustique.

8. Installation (1") selon la revendication 7, dans laquelle l'extrudeuse (2') comprend au moins deux vis d'extrusion (6a, 6b).

9. Installation (1 ; 1' ; 1") selon l'une quelconque des revendications 7 ou 8, dans lequel le système de contrôle (4) est configuré pour effectuer une analyse fréquentielle du signal acoustique enregistré par le capteur acoustique (14).

## Patentansprüche

1. Verfahren zur Extrusion eines Materials, umfassend ein Bindemittel und eine oder mehrere energetische Ladungen, unter Verwendung einer Anlage (1; 1'; 1"), umfassend:
- einen Extruder (2; 2'), umfassend eine Hülle (8), in der mindestens eine Extrusionsschnecke (6; 6a, 6b) vorhanden ist, wobei der Extruder mindestens einen akustischen Sensor (14) umfasst, der an der Hülle (8) befestigt ist, und
- ein Steuerungssystem (4), das dafür geeignet ist, um eine Anomalie entsprechend dem akustischen Signal zu detektieren, das von dem akustischen Sensor erfasst wird, wobei das Steuerungssystem dafür ausgelegt ist, um Variationen in der Amplitude des akustischen Signals zu messen, das von dem akustischen Sensor erfasst wird,
wobei das Verfahren einen Schritt der Extrusion des Materials quer durch den Extruder (2; 2') umfasst, in dem das akustische Signal, das von dem akustischen Sensor (14) erfasst wird, von dem Steuerungssystem (4) analysiert wird, und einen Schritt der Detektion einer Variation der Zusammensetzung des extrudierten Materials aus einer Variation in der Amplitude des akustischen Signals.

2. Verfahren nach Anspruch 1, wobei in dem Detektionsschritt eine Variation des Verhältnisses von Bindemittel/Ladungen detektiert wird.

3. Verfahren nach Anspruch 1 oder 2, wobei der Extruder (2') mindestens zwei Extrusionsschnecken (6a, 6b) umfasst.

4. Verfahren nach einem der Ansprüche 1 bis 3, wobei eine Vielzahl von akustischen Sensoren (14) an der Hülle befestigt ist, wobei jeder dieser Sensoren mit dem Steuerungssystem (4) verbunden ist.

5. Verfahren nach Anspruch 4, wobei die akustischen Sensoren (14) in der Umfangsrichtung um die Hülle (8) verteilt sind.

6. Verfahren nach Anspruch 4 oder 5, wobei die akustischen Sensoren (14) in der Längsrichtung entlang der Hülle (8) verteilt sind.

7. Extrusionsanlage (1; 1'; 1"), umfassend:
- einen Extruder (2; 2'), umfassend eine Hülle (8), in der mindestens eine Extrusionsschnecke (6; 6a, 6b) vorhanden ist, wobei der Extruder mindestens einen akustischen Sensor (14) umfasst, der an der Hülle befestigt ist, und
- ein Steuerungssystem (4), das dafür geeignet ist, um eine Anomalie entsprechend dem akustischen Signal zu detektieren, das von dem akustischen Sensor erfasst wird, wobei das Steuerungssystem dafür ausgelegt ist, um eine Analyse der Amplitude des akustischen Signals durchzuführen, das von dem akustischen Sensor erfasst wird,
wobei die Anlage eine Vielzahl von akustischen Sensoren (14) umfasst, die an der Hülle befestigt sind und in Umfangsrichtung um die Hülle verteilt sind, wobei jeder dieser Sensoren mit dem Steuerungssystem (4) verbunden ist, und
die Anlage **dadurch gekennzeichnet ist, dass** sie dafür ausgelegt ist, um einen Schritt der Detektion einer Variation der Zusammensetzung eines extrudierten Materials aus einer Variation in der Amplitude des akustischen Signals durchzuführen.

8. Anlage (1") nach Anspruch 7, wobei der Extruder (2') mindestens zwei Extrusionsschnecken (6a, 6b) umfasst.

9. Anlage (1; 1'; 1") nach einem der Ansprüche 7 oder 8, wobei das Steuerungssystem (4) dafür ausgelegt ist, um eine Frequenzanalyse des akustischen Signals durchzuführen, das von dem akustischen Sensor (14) erfasst wird.

## Claims

1. A method for extruding a material comprising a binder and one or several energetic fillers implementing an installation (1; 1'; 1") comprising:
- an extruder (2; 2') comprising a barrel (8) in which there is at least one extrusion screw (6; 6a, 6b), the extruder comprising at least one acoustic sensor (14) fixed on the barrel, and
- a control system (4) able to detect an anomaly based on the acoustic signal recorded by the acoustic sensor, the control system being configured to measure variations in the amplitude of the acoustic signal recorded by the acoustic sensor,
the method comprising a step of extruding the material through the extruder (2; 2') during which the acoustic signal recorded by the sensor (14) is analyzed by the control system (4), and a step of detecting a variation in the composition of the extruded material from a variation in the amplitude of the acoustic signal.

2. The method according to claim 1, wherein during the detection step, a variation in the binder/fillers ratio is detected.

3. The method according to claim 1 or 2, wherein the extruder (2') comprises at least two extrusion screws (6a, 6b).

4. The method according to any one of claims 1 to 3, wherein a plurality of acoustic sensors (14) are fixed on the barrel, each of these sensors being connected to the control system (4).

5. The method according to claim 4, wherein the acoustic sensors (14) are distributed circumferentially around the barrel (8).

6. The method according to claim 4 or 5, wherein the acoustic sensors (14) are distributed longitudinally along the barrel (8).

7. An extrusion installation (1; 1'; 1") comprising:
- an extruder (2; 2') comprising a barrel (8) in which there is at least one extrusion screw (6; 6a, 6b), the extruder comprising at least one acoustic sensor (14) fixed on the barrel, and
- a control system (4) able to detect an anomaly based on the acoustic signal recorded by the acoustic sensor, the control system being configured to perform an amplitude analysis of the acoustic signal recorded by the acoustic sensor,
the installation comprising a plurality of acoustic sensors (14) fixed on the barrel and distributed circumferentially around the barrel, each of these sensors being connected to the control system (4), and
the installation being **characterized in that** it is configured to perform a step of detecting a variation in the composition of an extruded material from a variation in the amplitude of the acoustic signal.

8. The installation (1") according to claim 7, wherein the extruder (2') comprises at least two extrusion screws (6a, 6b).

9. The installation (1; 1'; 1") according to any one of claims 7 or 8, wherein the control system (4) is configured to perform a frequency analysis of the acoustic signal recorded by the acoustic sensor (14).
